# EUROPÄISCHE PATENTSCHRIFT

(11) **EP 3 384 351 B1**
(45) Veröffentlichungstag und Bekanntmachung des Hinweises auf die Patenterteilung: **13.04.2022**
(21) Anmeldenummer: 16787368.6
(22) Anmeldetag: 19.10.2016
(51) Int. Cl.: G05B 9/03, G05B 19/418, B65G 43/10, B65G 47/84

(54) **VERFAHREN ZUM TRANSPORTIEREN VON BEHÄLTERN**
METHOD FOR TRANSPORTING CONTAINERS
PROCÉDÉ DE TRANSPORT DE CONTENEURS

(30) Priorität: 01.12.2015 DE 102015223933
(43) Veröffentlichungstag der Anmeldung: 10.10.2018
(73) Patentinhaber: Krones AG, 93073 Neutraubling (DE)
(72) Erfinder: LANGWIESER, Sebastian, 93073 Neutraubling (DE); FINGER, Dieter, 93073 Neutraubling (DE); SCHNEIDER, Helmut, 93073 Neutraubling (DE); STRAUSS, Johannes, 93073 Neutraubling (DE)
(74) Vertreter: Grünecker Patent- und Rechtsanwälte PartG mbB
(86) Internationale Anmeldenummer: PCT/EP2016/075026
(87) Internationale Veröffentlichungsnummer: WO 2017/092925

(56) Entgegenhaltungen:
- US-A- 5 970 763
- US-A1- 2009 033 272
- US-A1- 2009 188 773

## Beschreibung

Die vorliegende Erfindung betrifft ein Verfahren zum Transportieren von Behältern gemäß Oberbegriff des Anspruchs 1 sowie eine Vorrichtung zum Transportieren von Behältern gemäß Oberbegriff des Anspruchs 10.

### Stand der Technik

Verfahren und Vorrichtungen zum Transportieren von Behältern wie beispielsweise Flaschen in der getränkeverarbeitenden Industrie sind aus dem Stand der Technik bekannt. So ist es üblich, Behälter beispielsweise mittels Transfersternen durch eine Behälterbehandlungsanlage zu transportieren. Einzelne Behälterbehandlungsmaschinen der Behälterbehandlungsanlage können dabei als rotierende oder linear arbeitende Maschinen ausgebildet sein. Insbesondere bei rotierenden Maschinen ist eine Synchronisation der Bewegung in Transportrichtung nacheinander folgender Maschinen erforderlich. Ist diese Synchronisation nicht gegeben, kann es zu Fehlfunktionen und schlimmstenfalls zu Beschädigungen der Transfersterne oder Behälterbehandlungsmaschinen kommen.

Um die Beschädigungen möglichst gering zu halten, ist es beispielsweise aus der EP 1 967 927 A2 bekannt, die die betreffenden Einrichtungen antreibenden Servomotoren zum Stillstand zu bringen, falls in der numerischen Steuerung ein Fehler entdeckt wird. Dies erfolgt durch die Ausgabe eines Geschwindigkeitsbefehls mit dem Wert 0 an den Servomotor und gegebenenfalls zusätzlich durch mechanische Bremsen. Zwar können so die entsprechenden Servomotoren möglichst schnell angehalten werden, jedoch kommt es aufgrund fehlender Synchronisation der Bewegung der einzelnen Einrichtungen häufig trotzdem zu erheblichen Beschädigungen.

### Aufgabe

Ausgehend vom bekannten Stand der Technik ist es Aufgabe der Erfindung, ein Verfahren sowie eine Vorrichtung zum Transportieren von Behältern anzugeben, mit denen im Fall einer Fehlfunktion des Positionsgebers die Transporteinrichtungen der Behälter und insbesondere die entsprechenden Servomotoren zum Stillstand gebracht werden können und gleichzeitig Beschädigungen möglichst vermieden, zumindest jedoch reduziert werden.

### Lösung

Diese Aufgabe wird durch das Verfahren nach Anspruch 1 und die Vorrichtung zum Transportieren von Behältern nach Anspruch 10 gelöst. Vorteilhafte Weiterbildungen der Erfindung sind in den Unteransprüchen erfasst.

Das erfindungsgemäße Verfahren ist dadurch gekennzeichnet, dass, a) wenn der Positionsgeber die aktuelle Position der Transporteinrichtung ermitteln kann, wenigstens einer der Servomotoren geregelt unter Verwendung der vom Positionsgeber ermittelten Position zum Stillstand gebracht wird, oder, b) falls der Positionsgeber die aktuelle Position der Transporteinrichtung nicht ermitteln kann, wenigstens einer der Servomotoren gesteuert zum Stillstand gebracht wird, wobei anstelle der von dem Positionsgeber ermittelten aktuellen Position der Transporteinrichtung eine Soll-Position der Transporteinrichtung verwendet wird, um den Servomotor gesteuert zum Stillstand zu bringen. In beiden Fällen kann so versucht werden, die Synchronisation der Bewegung der Transporteinrichtungen zumindest teilweise während des Anhaltevorgangs aufrechtzuerhalten, was Beschädigungen an den einzelnen Transporteinrichtungen erheblich reduzieren kann.

Die oben genannte aktuelle Position kann beispielsweise durch ein inkrementell ermitteltes Signal des Positionsgebers bestimmt werden, welches durch Signalpulse oder Signaländerungen (beispielsweise von 0 auf 1 oder umgekehrt), die eine Drehung um einen vorgegebenen Winkel anzeigen, gebildet wird.

Bei dem gesteuerten zum Stilltand bringen wird beispielsweise nicht auf die Signale des Positionsgebers zurückgegriffen, um eine Regelung durchzuführen.

Das Verfahren, bei dem der Servomotor zum Stillstand gebracht wird, kann beispielsweise auch dann durchgeführt werden, wenn es zwischen einem inkrementell ermittelten Signal und einem absolut ermittelten Signal Unterschiede gibt. Während das inkrementell ermittelte Signal immer dann eine neue Positionsinformation weitergibt, wenn der Servomotor sich um einen vorgegebenen Winkel (wie zum Beispiel 1° oder 0,1°) weiterbewegt hat, gibt das absolut ermittelte Signal beispielsweise eine vorgegebene Position oder eine zu vorgegebenen Zeiten eingenommenen Position des Servomotors wieder. Das absolut ermittelte Signal kann beispielsweise die Information übertragen, dass der Rotor der Servomotors die Position 350° eingenommen hat. Das absolut ermittelte Signal wird bei laufendem Betrieb deutlich weniger oft übertragen als das inkrementell ermittelte Signal.

Die Regelung des Servomotors kann das absolut ermittelte Signal und das inkrementell ermittelte Signal vergleichen und sollte in Normalfall immer zu einem übereinstimmenden Ergebnis kommen. Die sich aus der Gesamtheit der inkrementell ermittelten Signale, die zwischen zwei absolut ermittelten Signalen übertragen wurden, ergebende Drehung (Drehwinkel) des Servomotors muss im Normalfall mit der Drehung, die sich durch die Differenz der beiden absolut ermittelten Signale ergibt, übereinstimmen. Falls jedoch das ein oder das andere Signal ausfällt, kann, je nach dem welches Signal ausfällt, der Servomotor mit dem obigem Verfahren zum Stillstand gebracht werden. Solange beispielweise mit dem inkrementell ermittelten Signal ein geregelter Betrieb möglich ist, wird der Servomotor damit geregelt zum Stilstand gebracht. Falls das inkrementell ermittelte Signal ausfällt, kann mit obigem Verfahren der Servomotor gesteuert zum Stillstand gebracht werden.

In einer Ausführungsform ist vorgesehen, dass einer der Servomotoren mit einer Verzögerung zum Stillstand gebracht wird, die kleiner als die maximal für den Servomotor mögliche Verzögerung ist. Die auf die Transporteinrichtung einwirkenden Drehmomente können damit reduziert werden, was Beschädigungen bei möglichen Kollisionen einzelner Bestandteile der Transporteinrichtungen minimieren kann.

In einer weiteren Ausführungsform ist vorgesehen, dass b) umfasst, dass ein Stromzeiger in Richtung der Soll-Position unabhängig vom am Servomotor anliegenden Drehmoment eingestellt wird. Der Servomotor kann so zuverlässig in den Stillstand gezwungen werden.

In einer Weiterbildung dieser Ausführungsform wird für die für das Erreichen des Stillstands des Servomotor erforderliche Zeit der maximal mögliche Strom für den Stromzeiger eingestellt. Mögliche Abweichungen auch in der Bewegung der Transporteinrichtungen relativ zueinander können so reduziert werden, was das Risiko weiterer Beschädigungen reduziert.

Es kann ferner vorgesehen sein, dass b) umfasst, dass die Position mit einem virtuellen Positionsgeber anstelle des Positionsgebers ermittelt wird. Da der eigentliche Positionsgeber des Servomotors nicht mehr in der Lage ist, die aktuelle Position der Transporteinrichtung zu bestimmen, kann ein entsprechender virtueller Positionsgeber vorteilhaft genutzt werden, um virtuell die Soll-Position des Servomotors als die aktuelle Position für die Ansteuerung der Bewegung des Servomotors zur Verfügung zu stellen.

In einer Weiterbildung dieser Ausführungsform wird die Position durch Ermitteln und Auswerten von an einem Anschluss wenigstens eines Servomotors anliegender Spannung oder Strom ermittelt. Dies erlaubt alternativ bzw. zusätzlich zur Verwendung der Soll-Position des Servomotors eine Verbesserung der Genauigkeit hinsichtlich der tatsächlichen (aktuellen) Position des Servomotors, was die Abweichung der Bewegung der Transporteinrichtungen zueinander weiter reduzieren und somit Beschädigungen verhindern kann.

In einer Ausführungsform ist vorgesehen, dass b) umfasst, dass die Ermittlung der Position durch wenigstens eine, von dem Positionsgeber verschiedene Maschinenkomponente erfolgt. Anstelle des nicht voll funktionsfähigen Positionsgebers kann so eine weitere Maschinenkomponente verwendet werden, die gegebenenfalls die aktuelle Position des Servomotors zuverlässiger bestimmen kann. Die Steuerung des Servomotors bis zum Stillstand kann so genauer erfolgen, was die Beschädigungen an den Transporteinrichtungen weiter vermindern kann.

In einer Weiterbildung dieser Ausführungsform ist die Maschinenkomponente ein Reservepositionsgeber oder ein Positionsgeber eines anderen, mit den Servomotoren wenigstens indirekt gekoppelten Antriebs oder ein Positionsgeber einer anderen Maschinenkomponente, die mit dem Servomotor angetrieben wird.

Die erfindungsgemäße Vorrichtung zum Transportieren von Behältern ist dadurch gekennzeichnet, dass die Vorrichtung ausgebildet ist, das Verfahren gemäß einer der obigen Ausführungsformen durchzuführen, um die Servomotoren zum Stillstand zu bringen.

In einer Ausführungsform ist eine der Transporteinrichtungen ein Karussell einer Behälterbehandlungsmaschine mit mehreren Behälteraufnahmen und die andere Transporteinrichtung ein stromauf oder stromab des Karussells angeordneter Transferstern, der Behälter dem Karussell zuführen oder Behälter aus dem Karussell abtransportieren kann. Da Beschädigungen an der eigentlichen Behälterbehandlungsmaschine kostspielig sein und erhebliche Stillstandszeiten nach sich ziehen können, kann die Anwendung des erfindungsgemäßen Verfahrens in einer solchen Vorrichtung besonders vorteilhaft genutzt werden.

Alternativ kann vorgesehen sein, dass die Transporteinrichtungen in Transportrichtung der Behälter nacheinander angeordnete Transfersterne sind. Stillstandszeiten durch fehlerhafte Transfersterne können so minimiert werden.

In einer Ausführungsform ist vorgesehen, dass die Vorrichtung einen Reservepositionsgeber oder einen weiteren Positionsgeber umfasst, der einem anderen, mit den Servomotoren wenigstens indirekt gekoppelten Antrieb zugeordnet ist oder der einer vom dem Servomotor angetriebenen Maschinenkomponente zugeordnet ist, wobei der Reservepositionsgeber oder der andere Positionsgeber zur Bestimmung der Position der Transporteinrichtung genutzt werden können.

Bei Ausfall eines der Positionsgeber der Servomotoren kann so auf eine andere Komponente umgeschaltet werden, um weiterhin in der Lage zu sein, die aktuelle Position des betreffenden Servomotor zu bestimmen, während die Servomotoren zum Stillstand gebracht werden, was das Risiko von Beschädigungen weiter reduziert.

Auch hier wird die aktuelle Position des Servomotors beispielsweise von einem inkrementell ermittelten Signal bestimmt.

### Kurze Beschreibung der Figuren

- Figur 1: zeigt eine schematische Darstellung einer Vorrichtung gemäß einer Ausführungsform der Erfindung;
- Figur 2: zeigt ein Diagramm des erfindungsgemäßen Verfahrens gemäß einer Ausführungsform.

### Ausführliche Beschreibung

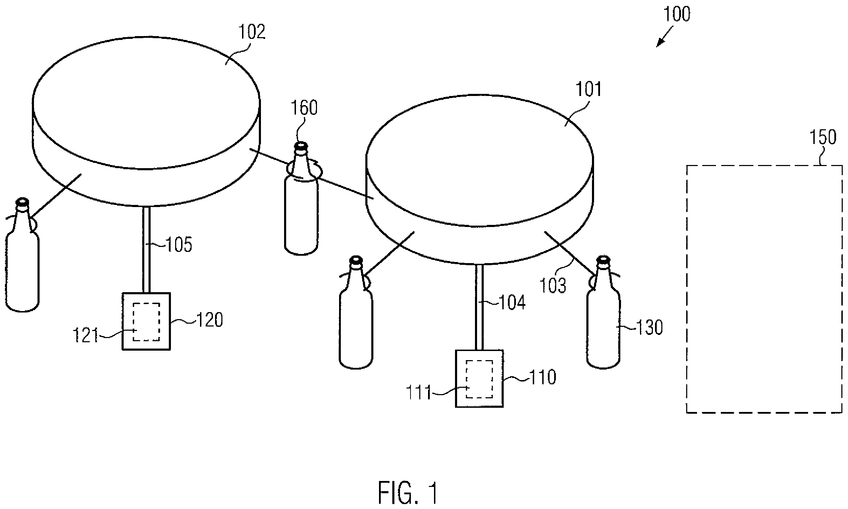

Figur 1 zeigt eine schematische Darstellung einer erfindungsgemäßen Vorrichtung 100 zum Transportieren von Behältern. Bei den Behältern handelt es sich üblicherweise um Flaschen oder andere Behälter der getränkeverarbeitenden Industrie. Die transportierten Behälter können dabei, wenn es sich um Kunststoffbehälter handelt, noch als Vorformling bzw. Preform vorliegen oder bereits vollständig zu Behältern ausgeformt sein. Weiterhin können die Behälter jedem möglichen weiteren Behandlungsschritt bereits unterzogen sein oder zu einem weiteren Behandlungsschritt transportiert werden.

Die Vorrichtung 100 umfasst zu diesem Zweck zwei Transporteinrichtungen 101 und 102. Diese sind hier als rotierende Transfersterne dargestellt, die Behälter 130 mit entsprechenden Einrichtungen 103 halten und transportieren. Die Einrichtungen 103 können dabei vielfältig ausgebildet sein und können sich auch zwischen den Transporteinrichtungen 101 und 102 unterscheiden. In der hier dargestellten Ausführungsform sind die Einrichtungen 103 als Neckhandling-Klammern ausgebildet, die die Behälter unterhalb ihres Tragrings umgreifen können. Alternativ können die Einrichtungen 103 auch beispielsweise als Behälteraufnahmen mit einem Stand-oder Drehteller und einer Zentrierglocke ausgebildet sein. Sämtliche Varianten für den Behältertransport sind hier denkbar.

Ebenso müssen die Transporteinrichtungen 101 und 102 nicht als rotierende Transfersterne ausgebildet sein, sondern können auch als linear arbeitende Maschinen ausgebildet sein. Weiterhin muss es sich bei beiden Transporteinrichtungen nicht notwendiger Weise um ausschließlich zum Transport der Behälter vorgesehene Maschinen handeln. So kann vorgesehen sein, dass eine der Transporteinrichtungen 101 oder 102 oder auch beide als Behälterbehandlungsmaschine ausgebildet sind. So kann beispielsweise die Transporteinrichtung 101 als Etikettiermaschine oder Füller oder Druckmaschine ausgebildet sein. Auch die Ausbildung einer Blasformmaschine oder Formfüllmaschine oder andere Behälterbehandlungsmaschine ist denkbar. Die andere Transporteinrichtung 102 kann als Transferstern ausgebildet sein, der die Behälter der Behälterbehandlungsmaschine zuführt oder die in der Behälterbehandlungsmaschine behandelten Behälter aus dieser abtransportiert. Die Behälterbehandlungsmaschine kann als Rundläufer ausgebildet sein.

In der in Figur 1 dargestellten Ausführungsform sind die Transporteinrichtungen 101 und 102 auf einer Antriebswelle 104 bzw. 105 gelagert und werden durch einen der jeweiligen Transporteinrichtung 101 und 102 zugeordneten Servomotor 110 und 120 in Drehung versetzt. Dabei ist die Bewegung der Transporteinrichtungen 101 und 102 elektronisch gekoppelt, wie dies durch die gestrichelte Linie 140 dargestellt ist. Das bedeutet, dass die Servomotoren 110 und 120 die Transporteinrichtungen 101 und 102 derart in Bewegung versetzen, dass eine synchrone, d.h. aufeinander abgestimmte Bewegung der Transporteinrichtungen erfolgt. Dass bedeutet beispielsweise, dass die als Klammern dargestellten Einrichtungen 103 in einem Übergabepunkt 160 sich derart relativ zueinander bewegen, dass ein Behälter aus einer der Transporteinrichtungen an die andere übergeben werden kann. Bei rotierenden Transporteinrichtungen 101 und 102 bedeutet dies insbesondere, dass die Bewegung derart erfolgen muss, dass die Klammern 103 in dem Übergabepunkt 160 sich derart relativ zueinander bewegen, dass der Behälter von der einen Klammer der einen Transporteinrichtung gelöst und von der anderen Klammer der anderen Transporteinrichtung aufgenommen werden kann. Die elektronische Kopplung der Bewegung der Transporteinrichtungen kann dabei zeitweise gleich Geschwindigkeiten/Winkelgeschwindigkeiten der Transporteinrichtungen bedeuten oder aufeinander abgestimmte Bewegungs- und Geschwindigkeitsprofile umfassen.

Um dies zu realisieren, werden die Servomotoren 110 und 120 üblicherweise elektronisch geregelt. Die Regelung kann dabei gemäß einem vorgegebenen Programm, das genau definiert, zu welchem Zeitpunkt welche Winkelstellung der Transporteinrichtung (Soll-Position) und welche Winkelgeschwindigkeit erreicht werden muss, erfolgen. Dieses Programm kann beispielsweise in einer den Servomotoren zugeordneten Regeleinheit in einem Speicher hinterlegt sein. Ein Positionsgeber 111 bzw. 121, der dem jeweiligen Servomotor 110 bzw. 120 zugeordnet ist, misst dabei die aktuelle Position des Servomotors (seine aktuelle Winkelstellung/Position bzw.

Ist-Position). Durch einen Vergleich der Soll-Position und der Ist-Position (beispielsweise in bzw. durch die Regeleinheit) kann dann abgeleitet werden, mit welcher Spannung bzw. welchem Strom der Servomotor beaufschlagt werden muss, um die gewünschte Soll-Position zu erreichen. Zu diesem Zweck überträgt der Positionsgeber beispielsweise ein inkrementelles Signal an die Regeleinheit, die letztlich die Servomotoren regelt. Dieses inkrementelle Signal (= inkrementell ermittelte Signal) ist indikativ für die relative Positionsänderung des Servomotors in Bezug auf eine vorherige Position.

Das inkrementelle Signal kann beispielsweise basierend auf einem von dem Positionsgeber erfassbaren optischen Indikator (Drehscheibe, Drehpositionsscheibe oder ähnliches) erzeugt werden, wobei der Indikator und zumindest der diesen erfassende Teil des Positionsgebers sich relativ zueinander bewegen können. Das inkrementelle Signal kann auch basierend auf einer Veränderung des magnetischen Flusses bzw. der magnetischen Feldstärke bei der Bewegung des Rotors des Servomotors ausgegeben werden. Dabei erfolgt die Ausgabe des inkrementellen Signals jeweils bei Änderung um einen bestimmten Winkel, sodass die Ausgabefrequenz des inkrementellen Signals letztlich von der Geschwindigkeit des Rotors des Servomotors abhängt.

Ein absolut ermitteltes Signal kann beispielsweise immer bei Erreichen einer vordefinierten Position (Referenzposition) ausgegeben werden, beispielsweise immer wenn der Rotor eine vordefinierte Nullmarke erreicht oder durchläuft. Es kann auch zu fest vorgegebenen Zeiten ausgegeben werden und eine absolute Positionsangabe des Rotors zu dem jeweiligen Zeitpunkt angeben. Die Referenzposition kann beispielsweise einer willkürlich gewählten 0°-Marke entsprechen oder auch zusätzliche andere Winkelpositionen können als zusätzliche oder andere Referenzpositionen vorgesehen sein. Das Erreichen der Referenzposition kann von dem Positionsgeber als (absolutes) Signal an die Regeleinheit übermittelt werden, sodass basierend auf dem Referenzsignal bzw. absoluten Signal das inkrementelle Signal stets einer Überprüfung unterzogen werden kann, und/oder die nach einer absoluten Positionsübermittlung übertragenen inkrementellen Signale basierend auf diesem absolut ermittelten Signal aufbauend ausgewertet werden können, um auf eine nach der absolut ermittelten Position gegebene Winkelposition zu schließen.

Bei einer Fehlfunktion des Positionsgebers kann nun der Fall eintreten, dass der Positionsgeber das absolute Signal oder das inkrementelle Signal nicht mehr übermitteln kann. Beide Fehler können zu einem Verlust der Synchronisation der Bewegung der Transporteinrichtungen führen, was zu erheblichen Beschädigungen führen kann.

Daher ist vorgesehen, dass, falls ein Fehler in wenigstens einem der Positionsgeber auftritt, die Servomotoren zum Stillstand gebracht werden, um weitere Beschädigungen zu vermeiden. Dabei wird erfindungsgemäß zwischen zwei Fällen unterschieden.

Im ersten Fall ist der Positionsgeber noch so weit funktionsfähig, dass er die aktuelle Position (also das inkrementelle Signal) ermitteln bzw. übertragen kann. In einem solchen Fall kann die Regeleinheit unter Verwendung dieser aktuellen Position die Transporteinrichtungen geregelt zum Stillstand bringen, indem die Bewegung verzögert wird (die Servomotoren werden gebremst). Da die jeweilige aktuelle Position der Transporteinrichtungen immer noch bestimmt werden kann, kann dies synchron oder möglichst synchron erfolgen, sodass Beschädigungen vollständig oder zumindest teilweise vermieden werden können. Der Stillstand der Transporteinrichtungen kann also trotz der Fehlfunktion geregelt durch Vergleich von Soll- und Ist-Positionen und entsprechender Regelung der Servomotoren erreicht werden.

Im zweiten Fall ist der Positionsgeber nicht mehr in der Lage, die aktuelle Position (also beispielsweise das inkrementelle Signal) der Transporteinrichtung zu ermitteln, sodass ab diesem Zeitpunkt nicht mehr bekannt ist, in welcher Position sich der Servomotor respektive die Transporteinrichtung befindet. Es ist damit weiterhin unbekannt, wie die relative Position der Transporteinrichtungen zueinander ist. Es ist damit aber auch nicht mehr möglich, zumindest die Transporteinrichtung mit dem fehlerhaften Positionsgeber geregelt zu betreiben, sodass es bei einer weiteren, ungeregelten Bewegung der Transporteinrichtungen zu Beschädigungen kommen kann.

In diesem Fall ist daher vorgesehen, dass anstelle der aktuellen Position des Servomotors bzw. der Transporteinrichtung die vorgesehene Soll-Position verwendet wird und die Transporteinrichtung bzw. der Servomotor mit dem fehlerhaften Positionsgeber unter Verwendung dieser Soll-Position anstelle der Ist-Position zum Stillstand gebracht werden. Die andere Transporteinrichtung, deren Positionsgeber noch funktionsfähig ist, kann in geregelter Weise unter Verwendung des Vergleichs aus Ist- und Soll-Position zum Stillstand gebracht werden.

Zwar kann die Verwendung der Soll-Position anstelle der Ist-Position nicht der Realität entsprechen, sodass die tatsächliche Position der Transporteinrichtung zu einem gegebenen Zeitpunkt von der Soll-Position abweicht, jedoch kann die vorgesehene Soll-Position für den Zeitraum, während dem die Transporteinrichtungen zum Stillstand gebracht werden, zumindest eine gute Näherung darstellen, bzw. auch völlig richtig sein. Die Servomotoren können somit trotz des Fehlers des Positionsgebers annähernd oder völlig synchron zum Stillstand gebracht werden, womit Beschädigungen vermieden werden.

Anstelle dieser Soll-Position oder um die Genauigkeit, mit der die aktuelle Position der Transporteinrichtung bzw. des Servomotors ermittelt wird, kann auch ein virtueller Positionsgeber anstelle des fehlerhaften Positionsgebers oder eine von dem fehlerhaften Positionsgeber verschiedene Maschinenkomponente verwendet werden.

In Bezug auf diese Ausführungsform zeigt Figur 1 gestrichelt eine weitere Einrichtung 150. Hierbei kann es sich um eine weitere Transporteinrichtung oder Behälterbehandlungsmaschine handeln. In jedem Fall handelt es sich dabei um eine bewegliche Einrichtung, wobei die Bewegung dieser Einrichtung 150 mit der Bewegung der Transporteinrichtungen 101 und 102, zumindest jedoch mit der Transporteinrichtung, deren Positionsgeber defekt ist, gekoppelt ist. Die Einrichtung 150 kann dabei beispielsweise ebenfalls mit einem Servomotor angetrieben werden, dem ein Positionsgeber zugeordnet ist. Da die Bewegung der Transporteinrichtungen 101 und 102 und der Einrichtung 150 gekoppelt ist, lässt sich mit dem Signal des der Einrichtung 150 zugeordneten Positionsgebers die aktuelle Position des Servomotors mit dem defekten Positionsgeber zumindest implizit bestimmen. Diese Bestimmung kann dann genutzt werden, um das kontrollierte Erreichen des Stillstands der Servomotoren zu verbessern, indem der bei normalem Betrieb verwendete Regelkreis basierend auf dem Vergleich der Ist- und Soll-Position mit der indirekt ermittelten Position anstelle der Ist-Position verwendet wird, um die Position der Transporteinrichtung bzw. die Lage des Rotors des Servomotors zu bestimmen und diese abhängig von der zu erreichenden Ist-Position zu regeln.

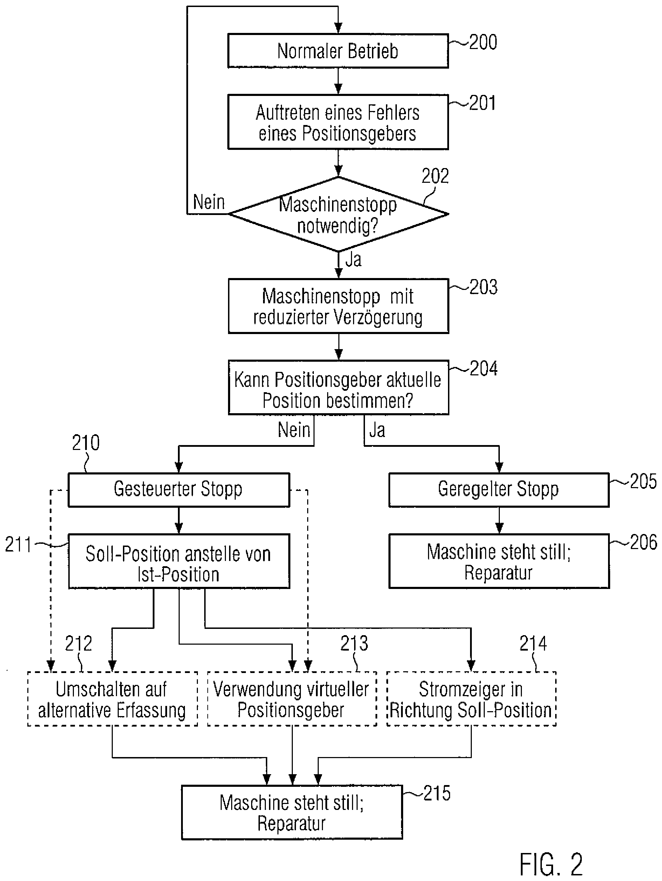

Um das erfindungsgemäße Verfahren weiter zu veranschaulichen, zeigt Figur 2 ein beispielhaftes Diagramm gemäß einer Ausführungsform dieses Verfahrens.

Das Verfahren umfasst ein Zeitintervall des normalen Betriebs 200 der Transporteinrichtungen. Während dieser Zeitspanne funktionieren zumindest die Positionsgeber der Servomotoren fehlerfrei und ihre Bewegungen können entsprechend des üblichen Vergleichs von Ist-Position und Soll-Position geregelt werden. Zu einem beliebigen Zeitpunkt tritt ein Fehler zumindest bei einem der Positionsgeber 201 auf. Dabei kann es sich um eine Vielzahl von Fehlern handeln. Relevant für das Beibehalten der Synchronisation der Bewegung der zwei Transporteinrichtungen sind jedoch insbesondere Fehler, die mit den oben beschriebenen inkrementellen Signalen und den absoluten Signalen zusammenhängen. Treten am oder im Positionsgeber oder in den Datenleitungen zur Regeleinheit Fehler auf, die zu einer nicht vollständigen oder ausbleibenden Übertragung zumindest eines dieser Signale führen, kann die synchrone Regelung der Bewegung der Servomotoren nicht mehr vollständig gewährleistet werden, sodass die Synchronisation verlorengehen und es zu Beschädigungen durch kollidierende Teile der Transporteinrichtungen kommen kann.

Wird ein Fehler festgestellt, wird zunächst bewertet, ob ein Maschinenstopp notwendig ist 202. Dies ist insbesondere bei Fehlern hinsichtlich der inkrementellen Signale oder der absoluten Signale der Fall. Bei anderen Fehlern, die zumindest die Synchronisation der Bewegung nicht beeinträchtigen, kann vorgesehen sein, dass kein Maschinenstopp eingeleitet wird und der normale Betrieb weiterhin ausgeführt wird. Ein solcher Fehler kann beispielsweise auch in einem der Maschine oder der Transporteinrichtung zugeordneten Bedienterminal unterdrückt werden.

Ist ein Maschinenstopp notwendig, so wird dieser vorzugsweise mit einer reduzierten Verzögerung (Bremskraft) 203 eingeleitet. Das Einleiten eines Maschinenstopps umfasst dabei, dass die Servomotoren der wenigstens zwei Transporteinrichtungen zum Stillstand gebracht werden. Erfolgt dies mit reduzierter Verzögerung, so wird zwar mehr Zeit benötigt, um die Servomotoren bis zum Stillstand zu bringen, jedoch wirken auf die einzelnen Servomotoren und des Weiteren auf die Transporteinrichtungen geringere Bremskräfte, sodass die Gefahr von Beschädigungen aufgrund abrupten Anhaltens der Servomotoren und Transporteinrichtungen vermieden werden können.

Nach dem Einleiten des Maschinenstopps 203 oder parallel dazu wird geprüft 204, ob der wenigstens eine fehlerhafte Positionsgeber die aktuelle Position bzw. Ist-Position des Servomotors (mit dem inkrementellen Signal) noch bestimmen kann. Besteht der Fehler des Positionsgebers also nicht in der Übertragung oder Erstellung bzw. Ausgabe des inkrementellen Signals, so kann der Positionsgeber die Ist-Position des Servomotors immer noch ermitteln und weiterleiten (erster Fall). In einem solchen Fall ist eine geregelte Bewegung der Transporteinrichtungen relativ zueinander unter Beibehalten der Synchronisation der Bewegung immer noch möglich. Ist der Positionsgeber nicht mehr in der Lage, das inkrementelle Signal auszugeben bzw. die Ist-Position zu ermitteln, so ist ein dem Normalbetrieb entsprechendes, Regeln der Bewegung der Transporteinrichtungen zueinander nicht mehr möglich (zweiter Fall).

Im ersten Fall wird unter Beibehaltung der Regelung der Bewegung der Transporteinrichtungen relativ zueinander, wie sie auch im normalen Betrieb erfolgt, ein geregelter Maschinenstopp 205 durchgeführt, bis die Servomotoren bzw. Transporteinrichtungen stillstehen. Wie bereits oben erwähnt, kann dies mit reduzierter Verzögerung/Bremskraft erfolgen. Für einen solchen Fall kann auch ein spezielles Programm in der Regeleinheit hinterlegt sein, das das Geschwindigkeitsprofil bzw. Bewegungsprofil für die Servomotoren für einen solchen geregelten Stopp enthält und bei Bedarf, also bei Auftreten eines entsprechenden Fehlers, automatisch verwendet wird. Die Regelung der Servomotoren erfolgt damit bei einem solchen Fehler des Positionsgebers stets nach dem selben Schema, sodass zuverlässig und kontrolliert der Stillstand der Servomotoren herbeigeführt werden kann. In dem speziellen Programm können anstelle der bei normalem Betrieb verwendeten Soll-Positionen zur Regelung der Bewegung der Servomotoren andere, auf das Erreichen des Stillstands der Transporteinrichtungen angepasste Soll-Positionen hinterlegt sein.

Sobald die Maschine stillsteht 206, kann der fehlerhafte Positionsgeber oder der gesamte Servomotor, der diesen Positionsgeber umfasst, repariert bzw. ausgetauscht werden. Da durch den geregelten Stopp keine Schäden an den Transporteinrichtungen oder übrigen Maschinen auftreten, da dieser Betrieb im Wesentlichen dem normalen Betrieb der Transporteinrichtungen entspricht, reduzieren sich die Stillstandszeiten erheblich, wenn ein solcher geregelter Stopp durchgeführt wird. Besonders vorteilhaft ist hier, wenn die Servomotoren schnell wechselbar an den Transporteinrichtungen angeordnet bzw. mit diesen verbunden sind. Der Austausch der Servomotoren oder Positionsgeber kann so noch schneller erfolgen und der Betrieb der Anlage wieder aufgenommen werden.

Im zweiten Fall, in dem ein geregelter Stopp unter Beibehaltung der gewöhnlichen Regelung der Bewegung der Servomotoren bzw. Transporteinrichtungen relativ zueinander basierend auf dem Vergleich der aktuellen Position (Ist-Position) (beispielsweise anhand des inkrementellen Signals) und der Soll-Position der Servomotoren nicht mehr möglich ist, wird ein gesteuerter Maschinenstopp 210 durchgeführt.

Dabei wird anstelle des nicht mehr verfügbaren inkrementellen Signals des Positionsgebers (da dieser gerade dieses Signal aufgrund des Fehlers nicht ordnungsgemäß ermitteln bzw. weiterleiten kann) die in dem Programm, das die Bewegung der Transporteinrichtungen im normalen Betrieb regelt, hinterlegte Soll-Position der Transporteinrichtung genutzt 211. Während des gesteuerten Stopps 210 kann dazu angenommen werden, dass sich die Transporteinrichtung zu jeder Zeit zumindest näherungsweise an der in dem Programm vorbestimmten Soll-Position befindet und damit der Stopp der Transporteinrichtungen bzw. Servomotoren durchgeführt werden, indem für das Erreichen der nächsten Soll-Position ausgehend von einer aktuellen Soll-Position der Servomotor ohne Berücksichtigung eventueller Abweichungen mit den für die Veränderung der Position nötigen Strömen/Spannungen betrieben wird. Zwar erlaubt dies keine Kontrolle der tatsächlichen Position der Transporteinrichtung bzw. der Position der Transporteinrichtungen relativ zueinander, jedoch kann bei verhältnismäßig geringer Zeit, die benötigt wird, um die Servomotoren anzuhalten, davon ausgegangen werden, dass die vorgesehene Soll-Position zumindest annähernd der Ist-Position entspricht. So können durch den gesteuerten Stopp 210 die Beschädigungen an den Transporteinrichtungen zumindest reduziert werden.

Es kann vorgesehen sein, dass zur Verwendung der Soll-Position anstelle der Ist-Position der Stromzeiger, der als Maß für das an dem Stator des Servomotors anliegende Magnetfeld und damit für die Bewegung des Rotors des Servomotors dient, während der Durchführung des gesteuerten Stopps 210 stets in Richtung der Soll-Position zeigt 214 und zwar unabhängig vom am Servomotor anliegenden Drehmoment. Die Soll-Position ist hier die Position bzw. Stellung, in der sich der Rotor des Servomotors bei der angelegten, reduzierten Verzögerung während des Maschinenstopps 203 zu einer gegebenen Zeit befindet. Besonders vorteilhaft ist es, wenn für die Zeit des gesteuerten Maschinenstopps 210 der Stromzeiger mit dem maximalen für den Servomotor mit fehlerhaftem Positionsgeber möglichen Strom beaufschlagt ist, sodass Abweichungen reduziert werden können.

Um die Genauigkeit der Soll-Position verglichen mit der tatsächlichen Ist-Position des Motors zu verbessern, kann alternativ oder zusätzlich auch vorgesehen sein, dass ein virtueller Positionsgeber verwendet wird 213. Dies kann beispielsweise dadurch erreicht werden, dass die Ist-Position des Rotors bzw. der Transporteinrichtung anhand der an dem Servomotor an zumindest einem Anschluss anliegenden Spannung oder dem anliegenden Strom abgeleitet wird. Diese Messwerte, also die Spannungen und Ströme, können genutzt werden, um die Soll-Position zu modifizieren und durch eine der Ist-Position besser entsprechende Approximation zu ersetzen. Alternativ kann auf die Verwendung der Soll-Position anstelle der Ist-Position auch verzichtet werden und die aus den Spannungen und Strömen abgeleitete Ist-Position für die Durchführung des gesteuerten Stopps verwendet werden.

Weiterhin kann vorgesehen sein, dass anstelle des fehlerhaften Positionsgebers ein Reservepositionsgeber verwendet wird 212, der dem Servomotor zugeordnet ist. Damit kann während des gesteuerten Stopps 210 auf die tatsächliche Ist-Position des Servomotors bzw. der Transporteinrichtung zugegriffen werden und somit die während des gesteuerten Stopps auftretenden Maschinenschäden noch weiter reduziert werden. Da während des Wechsels von dem eigentlichen Positionsgeber auf den Reservepositionsgeber eine geringe Zeitspanne existiert, in der überhaupt kein inkrementelles Signal verfügbar ist (da keiner der Positionsgeber dieses Signal während der Zeitspanne erzeugt) kann vorgesehen sein, dass während dieser Zeitspanne die Soll-Position anstelle der Ist-Position verwendet wird 211.

Ebenso ist denkbar, dass als alternative Erfassung 212 der noch funktionierende Positionsgeber der anderen Transporteinrichtung verwendet wird und basierend auf der Ist-Position dieses Servomotors die Ist-Position des Servomotors ermittelt wird, dessen Positionsgeber einen Fehler aufweist.

Alternativ kann auch die Ist-Position einer weiteren Maschinenkomponente, wie diese beispielhaft in Figur 1 mit dem Bezugszeichen 150 dargestellt ist, dazu genutzt werden, die Ist-Position des Servomotors mit fehlerhaftem Positionsgeber zu bestimmen. Aufgrund der in diesem Fall längeren Leitungswege und der notwendigen Umrechnung auf die Ist-Position des Servomotors mit dem fehlerhaften Positionsgeber kann diese Ausführungsform auch genutzt werden, um während des gesteuerte Maschinenstopps 210 in bestimmten Zeitintervallen die zunächst angenommenen Soll-Positionen, die anstelle der Ist-Positionen verwendet werden, zu korrigieren.

Die Alternativen 212 und 213, also die Verwendung eines alternativen Positionsgebers oder eines Reservepositionsgebers sowie das Umschalten auf einen virtuellen Positionsgeber können zum Erreichen eines gesteuerten Maschinenstopps auch ohne die Verwendung der Soll-Position anstelle der Ist-Position (Schritt 211) genutzt werden, sodass nur die durch sie gewonnen Positionsdaten des Servomotors mit fehlerhaftem Positionsgeber zur Steuerung bzw. zur Durchführung des gesteuerten Maschinenstopps genutzt werden. Dies wird in der Fig. 2 durch die gestrichelten Pfeile angedeutet.

Nachdem die Transporteinrichtungen bzw. die Maschine stillsteht 215, kann analog zum geregelten Stopp eine Reparatur des Positionsgeber oder Servomotors erfolgen.

## Patentansprüche

1. Verfahren zum Transportieren von Behältern mit wenigstens zwei, jeweils von einem Servomotor (110, 120) angetriebenen Transporteinrichtungen (101, 102), wobei eine Regelung der Servomotoren basierend auf einem Vergleich der von Positionsgebern (111, 121) der Servomotoren (110, 120) ermittelten Position der Servomotoren und einer Soll-Position der Servomotoren erfolgt und bei einem Fehler eines der Positionsgeber die Servomotoren zum Stillstand gebracht werden, **dadurch gekennzeichnet, dass**
a) wenigstens einer der Servomotoren geregelt unter Verwendung der vom fehlerhaften Positionsgeber ermittelten Position zum Stillstand gebracht wird (205), wenn der fehlerhafte Positionsgeber die aktuelle Position des wenigstens einen Servomotors ermitteln kann oder
b) wenigstens einer der Servomotoren gesteuert zum Stillstand gebracht wird (210), wenn der fehlerhafte Positionsgeber die aktuelle Position des wenigstens einen Servomotors nicht ermitteln kann, wobei anstelle der von dem fehlerhaften Positionsgeber ermittelten aktuellen Position des wenigstens einen Servomotors eine Soll-Position des wenigstens einen Servomotors verwendet wird (211), um den Servomotor gesteuert zum Stillstand zu bringen.

2. Verfahren nach Anspruch 1, **dadurch gekennzeichnet, dass** wenigstens einer der Servomotoren mit einer Verzögerung zum Stillstand gebracht wird, die kleiner als die maximal für den Servomotor mögliche Verzögerung ist (203).

3. Verfahren nach Anspruch 1 oder 2, **dadurch gekennzeichnet, dass** b) umfasst, dass der fehlerhafte Positionsgeber kein inkrementelles Signal, das indikativ für die aktuelle Position des Servomotors ist, erzeugen oder weiterleiten kann.

4. Verfahren nach Anspruch 1 oder 2, **dadurch gekennzeichnet, dass** b) umfasst, dass ein Stromzeiger in Richtung der Soll-Position unabhängig vom am Servomotor anliegenden Drehmoment eingestellt wird (214).

5. Verfahren nach Anspruch 4, **dadurch gekennzeichnet, dass** für die für das Erreichen des Stillstands des Servomotors erforderliche Zeit der maximal mögliche Strom für den Stromzeiger eingestellt wird.

6. Verfahren nach einem der Ansprüche 1 bis 3, **dadurch gekennzeichnet, dass** b) umfasst, dass die Position mit einem virtuellen Positionsgeber anstelle des Positionsgebers ermittelt wird (213).

7. Verfahren nach Anspruch 6, **dadurch gekennzeichnet, dass** die Position durch Ermitteln und Auswerten von an einem Anschluss wenigstens eines Servomotors anliegender Spannung oder Strom ermittelt wird.

8. Verfahren nach einem der Ansprüche 1 bis 3, **dadurch gekennzeichnet, dass** b) umfasst, dass die Ermittlung der Position durch wenigstens eine, von dem Positionsgeber verschiedene Maschinenkomponente erfolgt (212).

9. Verfahren nach Anspruch 8, wobei die Maschinenkomponente ein Reservepositionsgeber oder ein Positionsgeber eines anderen, mit den Servomotoren wenigstens indirekt gekoppelten Antriebs (15) ist.

10. Vorrichtung (100) zum Transportieren von Behältern (130) wie Flaschen in der getränkeverarbeitenden Industrie, umfassend wenigstens zwei, von jeweils einem Servomotor (110, 120) angetriebene Transporteinrichtungen (101, 102) für Behälter, wobei die Servomotoren (110, 120) basierend auf einem Vergleich der von jeweiligen Positionsgebern (111, 121) ermittelten Position und einer Soll-Position geregelt werden können und bei einem Fehler wenigstens eines Positionsgebers die Servomotoren zum Stillstand gebracht werden können, **dadurch gekennzeichnet, dass** die Vorrichtung ausgebildet ist, das Verfahren nach einem der Ansprüche 1 bis 9 durchzuführen, um die Servomotoren zum Stillstand zu bringen.

11. Vorrichtung nach Anspruch 10, **dadurch gekennzeichnet, dass** eine der Transporteinrichtungen ein Karussell einer Behälterbehandlungsmaschine mit mehreren Behälteraufnahmen ist und die andere Transporteinrichtung ein stromauf oder stromab des Karussells angeordneter Transferstern ist, der Behälter dem Karussell zuführen oder Behälter aus dem Karussell abtransportieren kann.

12. Vorrichtung nach Anspruch 10, **dadurch gekennzeichnet, dass** die Transporteinrichtungen in Transportrichtung der Behälter nacheinander angeordnete Transfersterne sind.

13. Vorrichtung nach einem der Ansprüche 10 bis 12, **dadurch gekennzeichnet, dass** die Vorrichtung einen Reservepositionsgeber oder einen weiteren Positionsgeber umfasst, der einem anderen, mit den Servomotoren wenigstens indirekt gekoppelten Antrieb (150) zugeordnet ist, wobei der Reservepositionsgeber oder der andere Positionsgeber zur Bestimmung der Position wenigstens eines Servomotors genutzt werden können.

## Claims

1. Method for transporting containers having at least two transport devices (101, 102) each driven by a servo motor (110, 120), wherein a closed-loop control of the servo motors is effected based on a comparison of the position of the servo motors determined by the position sensors (111, 121) of the servo motors (110, 120) and a target position of the servo motors, and the servo motors are brought to a standstill in the event of a fault of one of the position sensors, **characterized in that**
a) at least one of the servo motors is brought to a standstill in a closed-loop manner using the position determined by the faulty position sensor (205) if the faulty position sensor can determine the current position of the transport device, or
b) at least one of the servo motors is brought to a standstill in an open-loop manner (210) if the faulty position sensor cannot determine the current position of the transport device, wherein instead of the current position of the transport device determined by the faulty position sensor, a target position of the at least one servo motor is used (211) to stop the servo motor in an open-loop manner.

2. Method according to claim 1, **characterized in that** at least one of the servo motors is brought to a standstill with some delay which is smaller than the delay maximally possible for the servo motor (203).

3. Method according to claim 1 or 2, **characterized in that** b) includes that the position sensor cannot generate or forward an incremental signal that is indicative of the current position of the servo motor.

4. Method according to claim 1 or 2, **characterized in that** b) includes that a current indicator is set in the direction of the target position independent of the torque applied to the servo motor (214).

5. Method according to claim 4, **characterized in that** for the time required for achieving the standstill of the servo motor, the current maximally possible for the current indicator is set.

6. Method according to one of claims 1 to 3, **characterized in that** b) includes that the position is determined with a virtual position sensor instead of the position sensor (213).

7. Method according to claim 6, **characterized in that** the position is determined by determining and evaluating voltage or current applied to a terminal of at least one servo motor.

8. Method according to one of claims 1 to 3, **characterized in that** b) includes that the determination of the position is effected by at least one machine component different from the position sensor (212).

9. Method according to claim 8, wherein the machine component is a standby position sensor or a position sensor of another drive (15) at least indirectly coupled with the servo motors.

10. Device (100) for transporting containers (130), such as bottles in the beverage processing industry, comprising at least two transport devices (101, 102) for containers each driven by one servo motor (110, 120), wherein the servo motors (110, 120) may be controlled, by closed-loop control, based on a comparison of the position determined by the respective position sensors (111, 121) and a target position, and the servo motors may be brought to a standstill in the event of a fault of at least one position sensor, **characterized in that** the device is embodied to carry out the method according to one of claims 1 to 9 to bring the servo motors to a standstill.

11. Device according to claim 10, **characterized in that** one of the transport devices is a carousel of a container treatment machine with several container retainers, and the other transport device is a transfer starwheel disposed upstream or downstream of the carousel which may supply the carousel with containers or discharge containers from the carousel.

12. Device according to claim 10, **characterized in that** the transport devices are transfer starwheels successively disposed in the direction of transport of the containers.

13. Device according to one of claims 10 to 12, **characterized in that** the device comprises a standby position sensor or a further position sensor associated with another drive (150) at least indirectly coupled to the servo motors, wherein the standby position sensor or the other position sensor may be utilized for determining the position of the transport device.

## Revendications

1. Procédé de transport de récipients, comprenant au moins deux dispositifs de transport (101, 102) entraînés respectivement par un servomoteur (110, 120), dans lequel les servomoteurs sont asservis en se basant sur une comparaison entre la position des servomoteurs déterminée par des capteurs de position (111, 121) des servomoteurs (110, 120) et une position de consigne des servomoteurs, et les servomoteurs sont mis à l'arrêt en cas de défaillance d'un des capteurs de position, **caractérisé en ce que**
a) au moins un des servomoteurs est mis à l'arrêt (205) de manière asservie en recourant à la position déterminée par le capteur de position défaillant, si le capteur de position défaillant peut déterminer la position actuelle du au moins un servomoteur, ou
b) au moins un des servomoteurs est mis à l'arrêt (210) de manière commandée, si le capteur de position défaillant ne peut pas déterminer la position actuelle du au moins un servomoteur, dans lequel une position de consigne du au moins un servomoteur est utilisée (211) à la place de la position actuelle du au moins un servomoteur déterminée par le capteur de position défaillant afin de mettre à l'arrêt le au moins un servomoteur de manière commandée.

2. Procédé selon la revendication 1, **caractérisé en ce qu'**au moins un des servomoteurs est mis à l'arrêt (203) avec une décélération inférieure à la décélération maximale possible pour le servomoteur.

3. Procédé selon la revendication 1 ou 2, **caractérisé en ce que** b) implique que le capteur de position défaillant ne peut générer ou transmettre un signal incrémentiel indicatif de la position actuelle du servomoteur.

4. Procédé selon la revendication 1 ou 2, **caractérisé en ce que** b) implique qu'un indicateur de courant est ajusté (214) dans la direction de la position de consigne indépendamment du couple appliqué au servomoteur.

5. Procédé selon la revendication 4, **caractérisé en ce que** le courant maximal possible pour l'indicateur de courant est ajusté pour le temps nécessaire à l'atteinte de l'arrêt du servomoteur.

6. Procédé selon l'une quelconque des revendications 1 à 3, **caractérisé en ce que** b) implique que la position est déterminée (213) avec un capteur de position virtuel plutôt qu'avec ledit capteur de position.

7. Procédé selon la revendication 6, **caractérisé en ce que** la position est déterminée en déterminant et en évaluant la tension ou le courant appliqué(e) à une borne d'au moins un servomoteur.

8. Procédé selon l'une quelconque des revendications 1 à 3, **caractérisé en ce que** b) implique que la position est déterminée (212) grâce à au moins un composant de machine différent du capteur de position.

9. Procédé selon la revendication 8, dans lequel le composant de machine est un capteur de position de réserve ou un capteur de position d'un autre entraînement (15) couplé de manière au moins indirecte aux servomoteurs.

10. Dispositif (100) de transport de récipients (130) tels que des bouteilles dans l'industrie de la transformation des boissons, comprenant au moins deux dispositifs de transport (101, 102) destinés à des récipients et entraînés par respectivement un servomoteur (110, 120), dans lequel les servomoteurs (110, 120 ) sont asservis en se basant sur une comparaison entre la position déterminée par les capteurs de position (111, 121) respectifs et une position de consigne, et les servomoteurs peuvent être mis à l'arrêt en cas de défaillance d'au moins un capteur de position, **caractérisé en ce que** le dispositif est conçu pour mettre en oeuvre le procédé selon l'une quelconque des revendications 1 à 9 afin de mettre les servomoteurs à l'arrêt.

11. Dispositif selon la revendication 10, **caractérisé en ce que** l'un des dispositifs de transport est un carrousel d'une machine de manutention de récipients comprenant plusieurs logements de récipient et l'autre dispositif de transport est une étoile de transfert agencée en amont ou en aval du carrousel et pouvant amener des récipients au carrousel ou emmener des récipients issus du carrousel.

12. Dispositif selon la revendication 10, **caractérisé en ce que** les dispositifs de transport sont des étoiles de transfert agencées de manière successive dans la direction de transport des récipients.

13. Dispositif selon l'une quelconque des revendications 10 à 12, **caractérisé en ce que** le dispositif comprend un capteur de position de réserve, ou un autre capteur de position, associé à un autre entraînement (150) couplé de manière au moins indirecte aux servomoteurs, dans lequel le capteur de position de réserve ou l'autre capteur de position peut être utilisé pour déterminer la position d'au moins un servomoteur.
